# EUROPEAN PATENT SPECIFICATION

(11) **EP 3 226 676 B1**
(45) Date of publication and mention of the grant of the patent: **31.10.2018**
(21) Application number: 14838843.2
(22) Date of filing: 04.12.2014
(51) Int. Cl.: A01D 51/00, A63B 47/02

(54) **PICKING DEVICE AND ASSOCIATED METHOD**
PFLÜCKEINRICHTUNG UND VERFAHREN
DISPOSITIF DE CUEILLETTE ET PROCÉDÉ ASSOCIÉ

(43) Date of publication of application: 11.10.2017
(73) Proprietor: Cifarelli S.p.A., 27058 Voghera (Pavia) (IT)
(72) Inventor: CIFARELLI Roberto, I-27058 Voghera (PAVIA) (IT)
(74) Representative: Tarabbia, Luigi
(86) International application number: PCT/IT2014/000323
(87) International publication number: WO 2016/088142

(56) References cited:
- WO-A1-2010/095099
- DE-U1-202011 101 544
- US-A- 2 718 745
- US-A- 3 215 293
- US-A- 3 604 190
- US-B1- 6 216 876

## Description

### Field of the Invention

The present invention relates to the sector of picking up objects from a ground surface and in detail relates to a device for picking objects. The present invention is further aimed at illustrating a picking method of objects from a ground surface.

### Prior Art

It is known that picking up objects from a ground surface, when manually performed, is particularly laborious, as it requires repeated bending, which can be tiring. For this reason various device for picking objects from the ground have been developed as disclosed in US3215293 A, DE202011101544U1, US3604190 and US2718745 many of which are specifically destined for picking-up fruit from the ground.

In particular, picking devices have been developed over time comprising large-dimension self-propelling vehicles the cost, dimensions, weight and complexity of use whereof make them unsuitable for use by private persons.

These picking devices exploit powerful aspirating means for indiscriminately aspirating objects from the ground, but with a consequent production of considerable noise levels.

### Object of the Invention

The object of the invention is to describe a picking device which aims at least partially to solve the above-described drawbacks.

A further object of the present invention is to disclose a picking method which aims at least partially to solve the above-described drawbacks.

### Summary of the Invention

According to the present invention, a picking device is realised comprising a roller able to roll on said ground surface and comprising a plurality of radial elements radially arranged about a rotation axis and extending for a majority thereof parallel to said rotation axis; the arrangement of the radial elements defines a plurality of intermediate openings extending for a majority thereof along a parallel direction to said rotation axis and the radial elements being configured so as to flex in such a way as to cause a dilation of said opening that is sufficient to enable passage of said objects internally of a volume delimited by a totality of said radial elements; the device further comprises collecting means for said objects, said collecting means being positioned at least partially internally of said roller and being susceptible of at least temporarily housing internally thereof said objects when picked up from said terrain by said roller.
The radial elements are advantageously made in a stretched C-shape and comprise a first intermediate portion having a first radius of curvature and a pair of lateral portions having a second radius of curvature.

The picking device further comprises a central body provided with support elements for retaining lateral portions of said fixed radial elements.

In detail, said collecting means comprise an aspirating mouth, positioned at a central portion of said central body and being configured such as to place at least part of a hollow internal area of said central body in communication with an outside of the central body, said aspirating mouth being configured so as to enable aspiration of objects retained internally of a volume delimited by said plurality of radial elements.

Said collecting means can advantageously comprise a vacuum stage configured such as to aspirate said objects.

In detail, said vacuum stage communicates with said aspirating mouth via a conveyor conduit located laterally with respect to said central element.

The conveyor conduit is advantageously joined to said central element at a first end thereof such as to realise a conveyor passage with said cavity of said central element.

Said aspirating mouth advantageously exhibits a perpendicular axis with respect to said axis and is in use inclined towards the advancing direction of said roller.

The picking device according to the present invention is advantageously configured so as to be commanded via a command rod configured so as during use to enable a user to maintain a substantially erect position.

The command rod is advantageously fixed to a bracket hinged on said central body at an end thereof.

Said central element advantageously exhibits an internal cavity separated with respect to the volume external by a mobile separator element configured such as to maintain a first rest position in which it separates said internal cavity from said volume and at least a second position distinct from said first position in which it enables monodirectional transit of said objects internally of said central element.

In particular, the mobile separator element is installed at said aspirating mouth.

According to the present invention, a picking method for objects from a ground surface is disclosed according to claim 11.

Said extraction of said objects from said volume is advantageously carried out without any manual intervention on the part of the user by means of said collecting means.

Said extracting step advantageously comprises conveying said objects internally of a cavity of said central element.

Said collecting step advantageously comprises a step of moving separator means positioned on said central element and configured so as to enable a monodirectional passage of said objects towards an internal zone of said central element and further being configured such as to prevent passage of said objects towards said volume when collected in said central element

### Brief Description of the Drawings

The invention will be described in the following with reference to the accompanying drawings, in which:
- figure 1 illustrates a first front section view of a picking device according to the present invention;
- figure 2 illustrates a second side section view, obtained along lines I-I of figure 1, of the picking device according to the present invention.

### Detailed Description of Preferred Embodiments of the Invention.

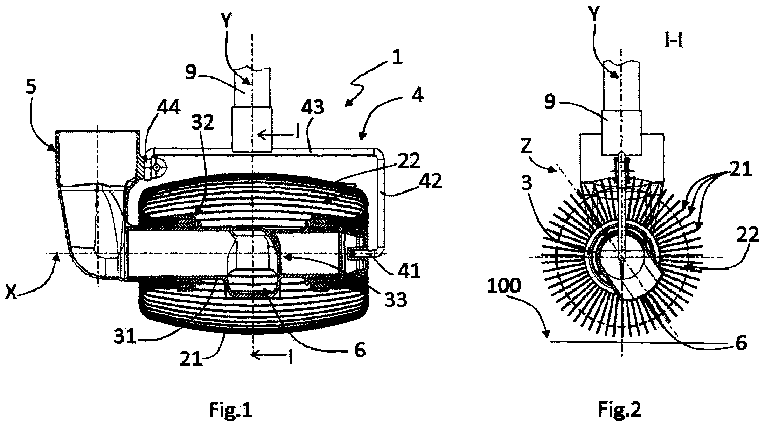

With reference to figure 1, reference number 1 denotes in its entirety a preferred embodiment of a picking device. The picking device 1 is conceived to be commanded by a user by means of a command rod 9, so as to be used with the user maintaining an erect position.

The picking device 1 is preferably though not limitingly realised to enable picking up fruit and nuts such as for example chestnuts, walnuts or the like when lying on a ground surface 100. However, the type of objects that can be picked-up using the picking device 1 is understood not to be limited to fruit and nuts, as it is possible to design the device that is the object of the present invention also for picking up, for example, small stones or balls.

In detail, the picking device 1 comprises a drum 2 made with a plurality of spokes 21, each bent at ends thereof so as to assume a stretched C-shape. Therefore the spokes are characterised by a central portion having a first radius of curvature that is very large and a pair of end portions which on the other hand exhibit a second radius of curvature that is narrower than the first. The spokes 21 are radially arranged about a central support element 3, having a body 31 of a hollow cylindrical type, having an axis X thereof in use positioned horizontally with respect to the ground surface 100 and on an external surface of which support elements 32 are splined; the support elements 32 are configured such as to house the ends of the spokes 21 so as to block them and prevent relative rotation with respect to one another. In this way, if observed in lateral section as in figure 2, the drum 2 takes on a comb-form having elements radially arranged about the axis X, in which the opening between a spoke and another is maximum at the further end from the axis X and diminishes progressively as it moves radially towards the axis X. The spokes 21 are configured so as to rotate *en bloc* internally of the support element; alternatively the support elements 32 themselves can rotate about the central support 3 so as to realise a drum or a rotating roller.

An intermediate volume 22 is therefore defined between the spokes 21 and the central support 3, which is the zone where the objects captured from the ground surface are housed.

The spokes 21 are in fact flexible from the point of view of the reciprocal positioning in a radial direction. In use, rotating the drum 2 on the ground surface 100, with even only the weight of the device 1 or by integrating that weight with a force exerted by the user on the command rod 9, successive pairs of consecutive spokes 21 deform progressively as they come into contact with the ground surface and/or with the object to be picked up, so as to enable the object to enter into the internal volume of the drum 2, thus being trapped thereby. Therefore the arrangement of the spokes 21 substantially defines a plurality of intermediate openings which extend for the majority thereof along a parallel direction to the axis X; the spokes, when flexing, cause a dilation of the opening with an elastic reaction force sufficient to enable entrance of the object into the volume 22 delimited thereby.

The central support 3 has a first end on which a connecting bracket 4 is constrained to the command rod. The connecting rod 4 exhibits a first portion 41 hinged to the end of the central support and extending along the axis X, a second portion 42 joined to said first portion which projects towards a perpendicular direction with respect to the axis X, and a third portion 43, joined to the second portion 42, also parallel to the axis X but positioned, with respect to the axis X, at a greater distance with respect to the maximum distance reached by the spokes 21 in relation to the axis X. The command rod 4 is constrained in a known way on the third portion 43, substantially in a central zone of the third portion 43.

The connecting bracket 4 lastly comprises a fourth portion 44, joined to the third portion 43 on the opposite end with respect to the end where the third portion 43 is joined to the second portion 42, which is again orientated in a perpendicular direction with respect to the axis X and is joined to a conveyor conduit 5, having a hollow cylindrical body which extends for a majority thereof perpendicularly to the axis X and exhibits a joint element 51 which enables connection thereof with a second end of the central support 3.

The conveyor conduit is connected to aspirating means, not illustrated in the figures appended to the present description, the aim of which is to enable aspiration of the objects encountered by the drum 2 on the ground surface towards, for example and not limitingly, a sack or a rubbish hopper. Tubes can be associated to the conveyor conduit, for example corrugated and of known type, for conveying objects collected from the ground into a remote zone with respect to the drum, for example and not limitingly into a backpack which includes also the aspirating system. Further, it is not imperative for the aspirating means to be positioned on the device 1 of the present invention. It is in fact possible for the aspirating means also to be of a remote type, not installed on the device 1 of the present invention, so as to enable the device to be flexible in compatibility thereof with aspirating means previously owned by the user.

An aspirating mouth 6 is present in a median part of the central body 3. The aspirating mouth, as can be seen in figure 2 appended to the present description, is in use orientated downwards, i.e. towards a ground surface 100. In particular, as can be seen from the appended figure, the aspirating mouth 6 is orientated inclined with respect to the command rod, having in fact an aspiration axis Z of its own perpendicular with respect to the axis X and inclined with respect to the axis Y of the command rod 9. Internally of the central support 3 a separator wall 33 delimits the part of the body which functions as an aspiration conduit with respect to the hollow part which is simply joined to the first portion 41 of the connecting bracket 4. Preferably, though not limitedly, the separator wall 33 exhibits a profiling such as to follow on with no interruptions from the profile of the aspirating mouth, so as to facilitate the inlet of the objects to be aspirated.

The inclination of the aspirating mouth is such that in use it is turned either forwards, following the movement direction of the device 1 when moved by rotating the drum 2 on the ground surface, or backwards. This advantageously facilitates the aspiration of the objects in the zone where they would tend to accumulate during the rolling of the drum or immediately in the moment of the collection of the objects themselves.

In use, therefore, in a first step the objects are picked up from the ground surface by means of at least a consecutive pair of spokes 21, and then after this they are trapped internally, until they come into proximity of the aspirating mouth 6; at this point, in a following step to the preceding one, the aspirating action exerted through the aspirating mouth 6 sucks them from the volume 22 internally of the central support cavity 3 and from there into the conveyor conduit.

The picking device 1 of the present invention can optionally be provided with a sack for collecting objects, not shown in the appended figures, designed to be emptied when full, possibly of a re-usable type.

In an alternative embodiment to the preceding embodiment, the picking device of the present invention can also be without aspirating means. A mobile separator element is optionally present on the aspirating mouth 6, irrespective of whether the aspirating means are present or absent, which separator element can permit inlet of objects present in the volume 22 defined by the spokes 21 internally of the mouth (and consequently internally of the central support 3), but prevent exit thereof. The mobile separator element therefore acts as a sort of check valve configured so as to prevent the collected articles from exiting once they have been introduced internally of the central support 3.

The mobile separator element, not illustrated in the appended drawings, has a first rest position in which it prevents communication between the inside and outside of the central element 3 through the mouth 6, and at least a second position, distinct from the preceding first position, in which it prevents communication between the inside and outside of the central element 3 through the mouth 6, and at least a second position in which on the contrary it permits monodirectional access of objects internally of the central element. The mobile separator element is advantageously retained in said first rest position by an elastic means which preferably although not limitedly realizable with a spring.

In use, when the volume 22 defined by the spokes 21 fills with objects, successive collections of objects with the relative introduction thereof internally of the volume 22 are such that the objects cause a pressure action against the mobile separator element such as to move it with respect to a rest position thereof, thus entering internally of the cavity of the central support 3.

Therefore the collecting means of the picking device 1 of the present invention, which comprise the aspirating mouth 6, the central support 3 with the cavity thereof and the conveyor conduit 5, can be of an active type, i.e. also comprising a vacuum stage, or of a passive type, should - as described in the foregoing - the aspirating means be absent. The collecting means are advantageously at least partly positioned internally of the roller and are therefore susceptible of at least partly housing internally thereof the objects which are picked up from the ground by the roller itself.

The advantages of the device illustrated according to the preceding description are clear: the device enables simply and easily picking up a varied multitude of objects from a ground surface, with no need for a user to bend, by action at least of a friction force exerted between two consecutive spokes of a roller. The device has a modest size and is therefore easy to transport, and can be stored in small spaces, for example in a dwelling. The aspirating device of the present invention is lastly more economical with respect to self-propelling aspirating means, and can therefore be sold and used advantageously even by private individuals in areas of modest dimensions.

Also, taking account of the second preferred embodiment of the picking device described in the foregoing, it is not necessary to have aspirating means of an active type in order to guarantee the functioning of the invention. Therefore in its simplest conception, the picking device of the present invention is a passive picking device, which becomes active only when it is equipped with an aspirator.

Lastly, clearly the picking device of the invention can have variants, additions or modifications applied thereto, obvious to a technical expert in the field, without forsaking the protective scope provided in the appended claims.

## Claims

1. A picking device (1) of objects from a ground surface, comprising:
- a roller (2) able to roll on said ground surface and comprising a plurality of radial elements (21) radially arranged about a rotation axis (X) and extending for a majority thereof parallel to said rotation axis (X), an arrangement of said radial elements (21) defining a plurality of intermediate openings extending for a majority thereof along a parallel direction to said rotation axis (X) and the radial elements (21) being configured so as to flex in such a way as to cause a dilation of said opening that is sufficient to enable passage of said objects internally of a volume delimited by a totality of said radial elements (21);
- collecting means for said objects, said collecting means being positioned at least partially inside said roller and being susceptible of at least temporarily housing internally thereof said objects when picked up from said terrain (100) by said roller (2), said collecting means comprising a central support body (3), provided with support elements for fixedly retaining lateral portions of said radial elements (21) and
**characterised in that** it comprises an aspirating mouth (6), positioned at a central portion of said central body and being configured such as to place at least part of a hollow internal area of said central body (3) in communication with an outside of the central body, said aspirating mouth (6) being configured so as to enable aspiration of objects retained internally of a volume delimited by said plurality of radial elements (21).

2. The picking device according to claim 1, wherein said radial elements (21) are made in a stretched C-shape and comprise a first intermediate portion having a first radius of curvature and a pair of lateral portions having a second radius of curvature.

3. The device according to claim 1, wherein said collecting means comprise a vacuum stage configured for aspirating said objects.

4. The device according to claim 3, wherein said vacuum stage communicates with said aspirating mouth (6) through a conveyor conduit (5) located laterally with respect to said central element (3).

5. The device of claim 4, wherein said conveyor conduit (5) is joined to said central element (3) at a first end thereof such as to realise a conveyor passage with said cavity of said central element (3).

6. The device according to claim 1, wherein said aspirating mouth exhibits a perpendicular axis with respect to said axis (X) and is in use inclined towards an advancing direction of said roller (2).

7. The picking device according to any one of the preceding claims, configured so as to be commanded via a command rod configured so as during use to enable a user to maintain a substantially erect position.

8. The device according to claim 7, wherein said command rod is fixed to a bracket hinged on said central body (3) at an end thereof.

9. The device according to claim 1, wherein said central element (3) exhibits an internal cavity separated with respect to the external volume by a mobile separator element configured such as to maintain a first rest position in which it separates said internal cavity from said volume and at least a second position distinct from said first position in which it enables monodirectional transit of said objects internally of said central element (3).

10. The device according to any one of the preceding claims, wherein said mobile separator element is installed at said aspirating mouth (6).

11. A picking method of objects from a ground surface (100) comprising:
- a first step of reciprocal movement of at least a pair of radial elements (21) being a part of a roller (2) of a picking device (1) susceptible of being made to slide on said ground surface for said picking;
- a following step of engulfing said objects internally of a volume defined externally of said plurality of radial elements (21) radially arranged about a central support element (3); and
- a following step of collecting said objects internally of collecting means, said collecting step comprising extraction of said objects from said volume;
said method being **characterised in that** it comprises an aspirating step of said objects from said volume; said aspirating step being performed by active aspirating means positioned on said picking device (1).

12. The method according to claim 11, wherein said extraction step comprises conveying said objects internally of a cavity of said central element (3).

13. The method according to claim 12, wherein said collecting step comprises a step of moving separator means positioned on said central element (3) and configured so as to permit a monodirectional passage of said objects towards an internal zone of said central element (3) and further being configured such as to prevent passage of said objects towards said volume once collected in said central element (3).

## Patentansprüche

1. Pflückeinrichtung (1) für Gegenstände von einer Bodenoberfläche, umfassend:
- eine Walze (2), die in der Lage ist, auf der Bodenoberfläche zu rollen, umfassend eine Vielzahl an radialen Elementen (21), die radial um eine Rotationsachse (X) angeordnet sind, und sich erstreckend für einen Großteil davon parallel zur Rotationsachse (X), wobei eine Anordnung dieser radialen Elemente (21) eine Vielzahl an Zwischenöffnungen definiert, die sich für einen Großteil davon entlang einer parallelen Richtung der Rotationsachse (X) erstrecken, wobei die radialen Elemente (21) ausgelegt sind, um sich so zu biegen, dass sie eine Dehnung der Öffnung herbeiführen, die ausreichend ist, um den Durchgang der Gegenstände in einem Volumen zu ermöglichen, das durch alle radialen Elemente (21) abgegrenzt ist;
- Aufnahmemittel für die Gegenstände, wobei die Aufnahmemittel mindestens teilweise in der Walze positioniert sind und mindestens vorübergehend innenseitig die Gegenstände aufnehmen können, wenn diese durch die Walze (2) vom Boden (100) gepflückt werden, wobei die Aufnahmemittel einen mittleren Halterungskörper (3) umfassen, der mit Halterungselementen versehen ist, um seitliche Abschnitte der radialen Elemente (21) fix zu halten, und
**dadurch gekennzeichnet, dass** sie einen Saugmund (6) umfasst, der an einem mittleren Abschnitt des mittleren Körpers positioniert und ausgelegt ist, sodass mindestens ein Teil einer hohlen internen Region des mittleren Körpers (3) mit einer Außenseite des mittleren Körpers in Kommunikation ist, wobei der Saugmund (6) so ausgelegt ist, dass er das Ansaugen von Gegenständen ermöglicht, die in einem Volumen gehalten werden, das durch die Vielzahl an radialen Elementen (21) abgegrenzt ist.

2. Pflückeinrichtung nach Anspruch 1, wobei die radialen Elemente (21) in einer gestreckten C-Form ausgebildet sind und einen ersten Zwischenabschnitt umfassen, aufweisend einen ersten Krümmungsradius, und ein Paar seitliche Abschnitte, aufweisend einen zweiten Krümmungsradius.

3. Einrichtung nach Anspruch 1, wobei die Aufnahmemittel eine Vakuumstufe umfassen, die ausgelegt ist, um die Gegenstände anzusaugen.

4. Einrichtung nach Anspruch 3, wobei die Vakuumstufe mit dem Saugmund (6) über eine Förderleitung (5) kommuniziert, die im Vergleich zum mittleren Element (3) seitlich angeordnet ist.

5. Einrichtung nach Anspruch 4, wobei die Förderleitung (5) mit dem mittleren Element (3) an einem ersten Ende davon zusammengefügt ist, um einen Förderdurchgang mit dem Hohlraum des mittleren Elements (3) herzustellen.

6. Einrichtung nach Anspruch 1, wobei der Saugmund eine senkrechte Achse zur Achse (X) aufweist und in Verwendung geneigt zu einer Vorschubrichtung der Walze (2) ist.

7. Pflückeinrichtung nach einem der vorhergehenden Ansprüche, so ausgelegt, dass sie über eine Bedienstange bedient werden kann, die so ausgelegt ist, dass sie es während der Nutzung einem Nutzer ermöglicht, eine im Wesentlichen aufrechte Körperhaltung beizubehalten.

8. Einrichtung nach Anspruch 7, wobei die Bedienstange an einem Bügel fixiert ist, der gelenkig an einem Ende des mittleren Körpers (3) befestigt ist.

9. Einrichtung nach Anspruch 1, wobei das mittlere Element (3) einen internen Hohlraum aufweist, der im Vergleich zum externen Volumen durch ein mobiles Trennelement getrennt ist, so ausgelegt, dass eine erste Anschlagsposition beibehalten wird, in der der interne Hohlraum vom Volumen getrennt ist, und mindestens eine zweite Position, die sich von der ersten Position unterscheidet, in der der Durchgang der Gegenstände im mittleren Element (3) in eine Richtung ermöglicht wird.

10. Einrichtung nach einem der vorhergehenden Ansprüche, wobei das mobile Trennelement am Saugmund (6) montiert ist.

11. Verfahren zum Pflücken von Gegenständen von einer Bodenfläche (100), umfassend:
- einen ersten Schritt zum gegenseitigen Bewegen von mindestens einem Paar von radialen Elementen (21), die Teil einer Walze (2) einer Pflückeinrichtung (1) sind, die ausgestaltet werden kann, um auf der Bodenfläche für das Pflücken zu gleiten;
- einen folgenden Schritt zum Einhüllen der Gegenstände in einem Volumen, das außenseitig der Vielzahl an radialen Elementen (21) definiert ist, radial angeordnet um ein mittleres Halterungselement (3), und
- einen folgenden Schritt zum Aufnehmen der Gegenstände in den Aufnahmemitteln, wobei der Schritt zum Aufnehmen das Herausziehen der Gegenstände aus dem Volumen umfasst,
wobei das Verfahren **dadurch gekennzeichnet ist, dass** es einen Schritt zum Ansaugen der Gegenstände aus dem Volumen umfasst, wobei der Schritt zum Ansaugen durch aktive Saugmittel ausgeführt wird, die auf der Pflückeinrichtung (1) positioniert sind.

12. Verfahren nach Anspruch 11, wobei der Schritt zum Herausziehen das Fördern der Gegenstände in einem Hohlraum des mittleren Elements (3) umfasst.

13. Verfahren nach Anspruch 12, wobei der Schritt zum Aufnehmen einen Schritt zum Bewegen von Trennmitteln umfasst, die auf dem mittleren Element (3) positioniert und so ausgelegt sind, dass der Durchgang der Gegenstände hinführend zu einer internen Zone des mittleren Elements (3) in eine Richtung erlaubt wird, und wobei diese zudem ausgelegt sind, um den Durchgang der Gegenstände hinführend zum Volumen zu verhindern, nachdem diese im mittleren Element (3) aufgenommen wurden.

## Revendications

1. Dispositif de cueillette (1) d'objets situés sur la surface du sol, comprenant :
- un rouleau (2) pouvant rouler sur ladite surface du sol et comprenant une pluralité d'éléments radiaux (21) disposés radialement autour d'un axe de rotation (X) et se prolongeant dans leur majorité parallèlement au dit axe de rotation (X), une disposition desdits éléments radiaux (21) définissant une pluralité d'ouvertures intermédiaires se prolongeant dans leur majorité le long d'une direction parallèle au dit axe de rotation (X) et les éléments radiaux (21) étant configurés de sorte à se fléchir de manière à provoquer une dilatation de ladite ouverture étant suffisante pour permettre le passage desdits objets à l'intérieur d'un volume délimité par une totalité desdits éléments radiaux (21) ;
- des moyens de collecte desdits objets, lesdits moyens de collecte étant positionnés au moins partiellement à l'intérieur dudit rouleau et étant susceptibles d'au moins loger temporairement en leur sein lesdits objets lorsqu'ils sont cueillis sur ledit terrain (100) par ledit rouleau (2), lesdits moyens de collecte comprenant un corps central de support (3) pourvu d'éléments de support pour retenir fixement des parties latérales desdits éléments radiaux (21) et
**caractérisé en ce qu'**il comprend une bouche d'aspiration (6) positionnée en correspondance d'une partie centrale dudit corps central et étant configurée de manière à placer au moins une partie d'une zone interne creuse dudit corps central (3) en communication avec un extérieur du corps central, ladite bouche d'aspiration (6) étant configurée de manière à permettre l'aspiration des objets retenus à l'intérieur d'un volume délimité par ladite pluralité d'éléments radiaux (21).

2. Dispositif de cueillette selon la revendication 1, dans lequel lesdits éléments radiaux (21) sont réalisés en forme de « C » étiré et comprennent une première partie intermédiaire comportant un premier rayon de courbure et une paire de parties latérales comportant un second rayon de courbure.

3. Dispositif selon la revendication 1, dans lequel lesdits moyens de collecte comprennent un étage sous vide configuré pour aspirer lesdits objets.

4. Dispositif selon la revendication 3, dans lequel ledit étage sous vide communique avec ladite bouche d'aspiration (6) à travers un conduit d'acheminement (5) situé latéralement par rapport au dit élément central (3).

5. Dispositif selon la revendication 4, dans lequel ledit conduit d'acheminement (5) est uni au dit élément central (3) à sa première extrémité de manière à réaliser un passage d'acheminement avec ladite cavité dudit élément central (3).

6. Dispositif selon la revendication 1, dans lequel ladite bouche d'aspiration présente un axe perpendiculaire par rapport au dit axe (X) et est, en fonctionnement, inclinée vers une direction de progression dudit rouleau (2).

7. Dispositif de cueillette selon l'une quelconque des revendications précédentes, configuré de sorte à être commandé par une tige de commande configurée de manière à permettre, pendant l'utilisation, à un utilisateur de maintenir une position substantiellement droite.

8. Dispositif selon la revendication 7, dans lequel ladite tige de commande est fixée à un support monté articulé sur ledit corps central (3) à une de ses extrémités.

9. Dispositif selon la revendication 1, dans lequel ledit élément central (3) présente une cavité interne séparée par rapport au volume extérieur par un élément de séparation mobile configuré de manière à maintenir une première position d'appui dans laquelle il sépare ladite cavité interne dudit volume et au moins une seconde position distincte de ladite première position dans laquelle il permet le transit unidirectionnel desdits objets à l'intérieur dudit élément central (3).

10. Dispositif selon l'une quelconque des revendications précédentes, dans lequel ledit élément de séparation mobile est installé en correspondance de ladite bouche d'aspiration (6).

11. Procédé de cueillette d'objets situés sur la surface du sol (100), comprenant :
- une première étape de mouvement réciproque d'au moins une paire d'éléments radiaux (21) faisant partie d'un rouleau (2) d'un dispositif de cueillette (1) susceptible de glisser sur ladite surface du sol pour ladite cueillette ;
- une étape successive servant à englober lesdits objets à l'intérieur d'un volume défini extérieurement de ladite pluralité d'éléments radiaux (21) radialement disposés autour d'un élément central de support (3) ; et
- une étape successive de collecte desdits objets à l'intérieur des moyens de collecte, ladite étape de collecte comprenant l'extraction desdits objets dudit volume ;
ledit procédé étant **caractérisé en ce qu'**il comprend une étape d'aspiration desdits objets dudit volume ; ladite étape d'aspiration étant réalisée par des moyens d'aspiration actifs positionnés sur ledit dispositif de cueillette (1).

12. Procédé selon la revendication 11, dans lequel ladite étape d'extraction comprend l'acheminement desdits objets à l'intérieur d'une cavité dudit élément central (3).

13. Procédé selon la revendication 12, dans lequel ladite étape de collecte comprend une étape de déplacement des moyens de séparation positionnés sur ledit élément central (3) et configurés de manière à permettre un passage unidirectionnel desdits objets vers une zone interne dudit élément central (3) et étant de plus configurés de manière à empêcher le passage desdits objets vers ledit volume une fois collectés dans ledit élément central (3).
